# EUROPEAN PATENT APPLICATION

(11) **EP 1 489 787 A1**
(43) Date of publication of application: **22.12.2004**
(21) Application number: 03745206.7
(22) Date of filing: 20.03.2003
(51) Int. Cl.: H04L 12/56, H04B 7/26

(54) **BASE STATION APPARATUS AND PACKET TRANSMISSION METHOD**

(30) Priority: 28.03.2002 JP 2002091206
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: PCT/JP2003/003395
(87) International publication number: WO 2003/084155

(57) **Abstract**

A first scheduler 152 carries out scheduling deciding a destination apparatus based on radio line quality prediction results from a radio line quality prediction section 107. A second scheduler 153 carries out scheduling on a time slot to which a packet to be retransmitted is assigned by the first scheduler 152, based on the radio line quality prediction results from the radio line quality prediction section 107 and the scheduling results of the first scheduler 152. A transmission control section 155 controls a transmission queue 156, an error correction encoding section 158 and a modulation section 159, in accordance with the scheduling results of the first scheduler 152 when a signal is an ACK signal, and in accordance with the scheduling results of the second scheduler 153 when the signal is a NACK signal. In this way, even when a transmitted packet is correctly demodulated, other packet can be transmitted in the time slot to which a packet to be retransmitted is assigned, so that decrease in the transmission rate can be prevented.

## Description

### Technical Field

The present invention relates to a base station apparatus and packet transmission method for carrying out a downlink high-speed packet transmission.

### Background Art

There has been developed a downlink high-speed packet transmission scheme (HSDPA, etc.) where a plurality of communication terminal apparatuses share a high-speed and large-capacity downlink channel and a high-speed packet transmission is carried out. In this transmission scheme, a scheduling technique and an adaptive modulation technique have been used in order to enhance a transmission rate.

The scheduling technique is a technique in which a base station apparatus sets a communication terminal apparatus (hereinafter referred to as a "destination apparatus") serving as a downlink high-speed packet destination for each time slot and assigns a packet to be transmitted to a destination apparatus. Further, the adaptive modulation technique is a technique in which a base station apparatus determines a modulation method or an error correction encoding scheme adaptively depending on a state of a propagation path of a communication terminal apparatus to which a packet is transmitted.

The base station apparatus predicts line quality in each communication terminal apparatus for each time slot of one frame, determines as a destination apparatus a communication terminal apparatus with the best line quality, and assigns to each time slot a packet to the destination apparatus. Then, the base station apparatus subjects the packet to error correction encoding and modulation according to information indicating scheduling results and a scheme determined by scheduling, and transmits the packet to the destination apparatus.

Based on the information indicating received scheduling results, each communication terminal apparatus carries out demodulation in a time slot to which the packet addressed to its own station is assigned, and carries out CRC detection, etc. When packet data can be correctly demodulated, the communication terminal apparatus transmits an ACK signal indicating this result to the base station apparatus, whereas when packet data cannot be correctly demodulated, the communication terminal apparatus transmits an NACK signal indicating this result to the base station apparatus.

When receiving the NACK signal, the base station apparatus retransmits the previously transmitted packet in the time slot to which the packet is assigned by the scheduling. However, when the number of times for retransmission reaches the maximum number of times for retransmission previously set in the system, the relevant packet is discarded and a new packet is transmitted.

In a conventional scheduling method, however, when a transmitted packet is correctly demodulated in the destination apparatus and is not required to be retransmitted, subsequent time slots are not used, and as a result, a transmission rate is decreased.

### Disclosure of Invention

The object of the present invention is to provide a base station apparatus and a packet transmission method, where even when a transmitted packet is correctly demodulated, other packet can be transmitted in a time slot to which a packet to be retransmitted is assigned, so that decrease in transmission rate can be prevented.

This object is achieved by preparing two schedulers to transmit a packet assigned by any one of schedulers, based on the decision results indicating whether or not retransmission of the previously transmitted packet is necessary.

### Brief Description of Drawings

FIG. 1 is a block diagram showing a configuration of a base station apparatus according to one embodiment of the present invention,
FIG. 2 is a view showing one example of a scheduling in a first scheduler according to one embodiment of the present invention, and
FIG. 3 is a view showing one example of a scheduling in a second scheduler according to one embodiment of the present invention.

### Best Mode for Carrying Out the Invention

Embodiments of the present invention are described in detail below by referring to the accompanying drawings.

### (Preferred Embodiment)

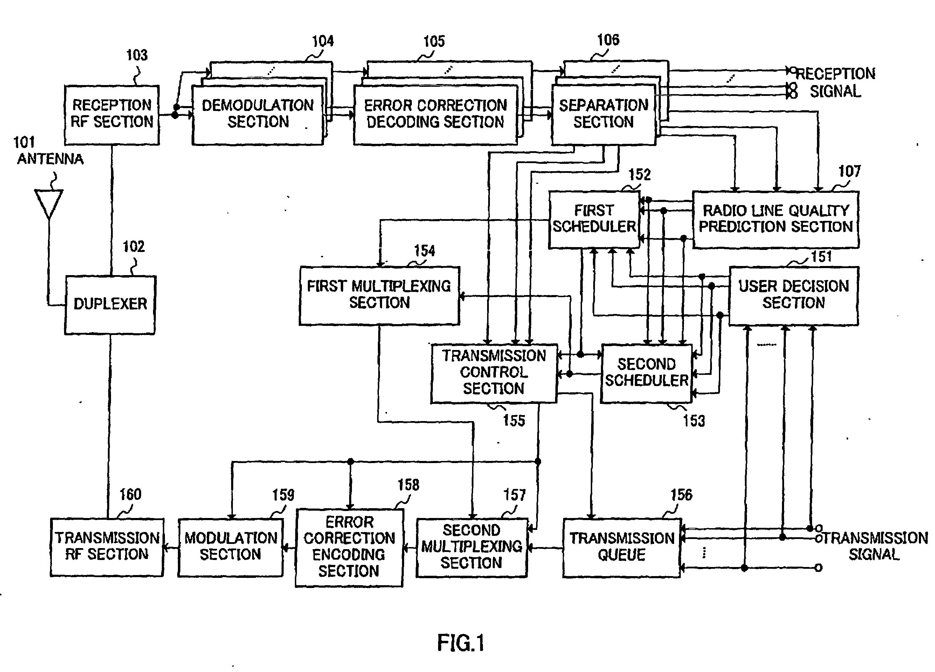

FIG. 1 is a block diagram showing a configuration of a base station apparatus according to one embodiment of the present invention. In FIG. 1, the base station apparatus comprises an antenna 101, a duplexer 102, a reception RF section 103, a demodulation section 104, an error correction decoding section 105, a separation section 106 and a radio line quality prediction section 107. The base station apparatus further comprises a user decision section 151, a first scheduler 152, a second scheduler 153, a first multiplexing section 154, a transmission control circuit 155, a transmission queue 156, a second multiplexing section 157, an error correction encoding section 158, a modulation section 159 and a transmission RF section 160.

The duplexer 102 outputs a signal received by the antenna 101 to the reception RF section 103. Further, the duplexer 102 radio-transmits, from the antenna 101, a signal outputted from the transmission RF section 160.

The reception RF section 103 converts a radio-frequency received signal outputted from the duplexer 102 into a baseband digital signal, and outputs it to the demodulation section 104.

The demodulation section 104 is provided as many as the number of the communication terminal apparatuses which carry out radio communication, carries out demodulation processing on the received baseband signal, and outputs the resulting signal to the error correction decoding section 105. The error correction decoding section 105 is provided as many as the number of the communication terminal apparatuses which carries out radio communication, carries out error correction decoding processing such as Viterbi decoding on the demodulated signal, and outputs the resulting signal to the separation section 106.

The separation section 106 is provided as many as the number of the communication terminal apparatuses which carries out radio communication, separates an ACK signal or a NACK signal from the decoded signal, and outputs it to the transmission control section 155. In addition, the separation section 106 separates a report value from the decoded signal, and outputs it to the radio line quality prediction section 107. Incidentally, the report value measured in the communication terminal apparatus is a value indicating the state of a propagation path between each relevant communication terminal apparatus and the base station apparatus.

The radio line quality prediction section 107 predicts the quality of one-frame radio line in all the communication terminal apparatuses based on the report value from each communication terminal apparatus, and outputs the prediction results to the first scheduler 152 and the second scheduler 153.

Based on the user information contained in a header of transmission data in each communication terminal apparatus, the user decision section 151 decides that the relevant transmission data are to be used for transmission to which user (communication terminal apparatus), and outputs the decision results to the first scheduler 152 and the second scheduler 153.

The first scheduler 152 refers to the decision results of the user decision section 151, and carries out scheduling deciding a destination apparatus based on the radio line quality prediction results from the radio line quality prediction section 107. In general, the first scheduler 152 assigns the communication terminal apparatus with the best line quality in each time slot. Further, the first scheduler 152 outputs information indicating the scheduling results to the second scheduler 153, the first multiplexing section 154 and the transmission control section 155.

The second scheduler 153 refers to the decision results of the user decision section 151, and carries out scheduling on the time slot to which a packet to be retransmitted is assigned by the first scheduler 152, based on the radio line quality prediction results from the radio line quality prediction section 107 and the scheduling results of the first scheduler 152. In that case, the second scheduler 153 assigns a communication terminal apparatus with the best line quality except for the communication terminal apparatus assigned by the first scheduler 152. Further, the second scheduler 153 outputs the information indicating the scheduling results to the first multiplexing section 154 and the transmission control section 155.

Incidentally, the schedulings of the first scheduler 152 and the second scheduler 153 will be detailed later.

The first multiplexing section 154 multiplexes the information indicating the destination apparatus outputted from the first scheduler 152 and the information indicating the destination apparatus outputted from the second scheduler 153, and outputs the resulting information to the second multiplexing section 157.

When inputting an ACK signal, the transmission control section 155 instructs the transmission queue 156 to transmit new data. On the other hand, when inputting a NACK signal, the transmission control section 155 instructs the transmission queue 156 to retransmit the previously transmitted data. Further, the transmission control section 155 outputs the information indicating a modulation method and an encoding rate to the second multiplexing section 157, the error correction encoding section 158 and the modulation section 159, based on the scheduling results of the first scheduler 152 and the second scheduler 153.

The transmission queue 156 selects data to the destination apparatus instructed by the transmission control section 155. On that occasion, when receiving an instruction to transmit new data, the transmission queue 156 deletes the stored data and outputs new data to the second multiplexing section 157, while storing the new data. On the other hand, when receiving an instruction to retransmit the previously transmitted data, the transmission queue 156 outputs the stored data to the second multiplexing section 157.

The second multiplexing section 157 multiplexes the information indicating the modulation method and encoding rate outputted from the transmission control section 155 on the data outputted from the transmission queue 156. The error correction encoding section 158 subjects the output signal of the multiplexing section 157 to error correction encoding according to the encoding rate scheme selected by the transmission control section 155, and outputs the resulting signal to the modulation section 159. The modulation section 159 modulates the output signal of the error correction encoding section 158 according to the modulation method selected by the transmission control section 155, and outputs the resulting signal to the transmission RF section 160.

The transmission RF section 160 converts a baseband digital signal outputted from the modulation section 159 into a radio-frequency signal, and outputs the resulting signal to the duplexer 102.

The schedulings of the first scheduler 152 and the second scheduler 153 are described in detail below.

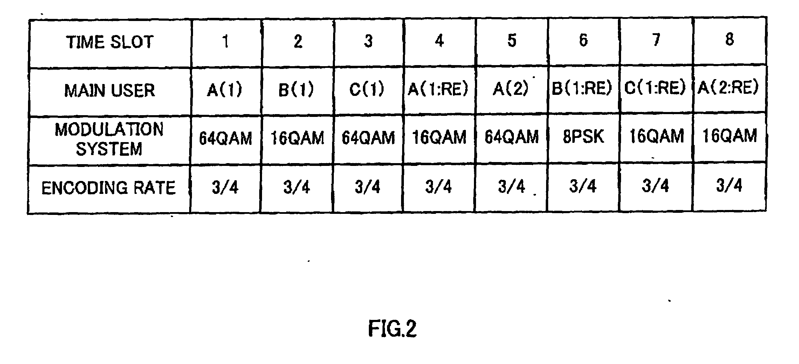

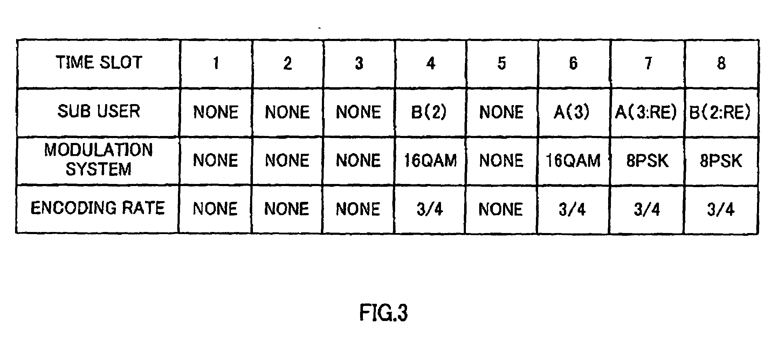

FIG. 2 is a view showing one example of the scheduling of the first scheduler 152. Further, FIG. 3 is a view showing one example of the scheduling of the second scheduler 153. In the columns of the main user in FIG. 2 and FIG. 3, "A, B, C···" express destination apparatuses, "(1), (2), (3), ···" express the number of packets to be transmitted to the relevant destination apparatuses and " 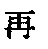 " expresses retransmission.

As shown in FIG. 2, the first scheduler 152 carries out scheduling deciding the destination apparatus, the packet to be transmitted, the modulation scheme and the encoding rate for each time slot of one frame. For example, FIG. 2 shows that the first scheduler 152 carries out scheduling such that a first packet is transmitted to a destination apparatus "A" by a 64QAM modulation system and a 3/4 encoding rate in a time slot 1.

The second scheduler 153 carries out scheduling deciding the destination apparatus, the packet to be transmitted, the modulation system and the encoding rate for the time slot to which the first scheduler 152 has assigned a packet to be retransmitted. In FIG. 2, packets to be retransmitted are assigned to time slots 4, 6, 7 and 8. Accordingly, the second scheduler 153 carries out the scheduling only for these time slots, as shown in FIG. 3.

The first multiplexing section 154 multiplexes the information indicating scheduling results of the first scheduler 152 and the second scheduler 153 as shown in FIG. 2 and FIG. 3, and outputs the resulting information to the second multiplexing section 157.

The transmission control section 155 controls the transmission queue 156, the error correction encoding section 158 and the modulation section 159 in accordance with the scheduling results of the first scheduler 152 as shown in FIG. 2 when a signal inputted from the separation section 106 is an ACK signal, and in accordance with the scheduling results of the second scheduler 153 as shown in FIG. 3 when the signal is a NACK signal.

For example, when inputting an ACK signal in the time slot 4 in FIG. 2 and FIG. 3, the transmission control section 155 instructs the transmission queue 156 to transmit a second packet addressed to a communication terminal apparatus "B", and outputs information indicating a 16QAM modulation system and a 3/4 encoding rate to the second multiplexing section 157, the error correction encoding section 158 and the modulation section 159.

Thus, by providing two schedulers to transmit a packet assigned by any one of schedulers based on the decision results indicating whether or not retransmission of the previously transmitted packet is necessary, even when the transmitted packet is correctly demodulated, other packet can be transmitted in the time slot to which a packet to be retransmitted is assigned.

As is clear from the above descriptions, according to the present invention, even when a transmitted packet is correctly demodulated, other packet can be transmitted in a time slot to which a packet to be retransmitted is assigned, so that decrease in the transmission rate can be prevented.

This application is based on Japanese Patent Application No. 2002-091206 filed on Mar. 28, 2002, entire content of which is incorporated by reference herein.

### Industrial Applicability

The present invention is suitable for use in a base station apparatus in a radio communication system for carrying out a downlink high-speed packet transmission.
FIG. 1
   - 101: ANTENNA
   - 102: DUPLEXER
   - 103: RECEPTION RF SECTION
   - 104: DEMODULATION SECTION
   - 105: ERROR CORRECTION DECODING SECTION
   - 106: SEPARATION SECTION
   - 107: RADIO LINE QUALITY PREDICTION SECTION
   - 151: USER DECISION SECTION
   - 152: FIRST SCHEDULER
   - 153: SECOND SCHEDULER
   - 154: FIRST MULTIPLEXING SECTION
   - 155: TRANSMISSION CONTROL SECTION
   - 156: TRANSMISSION QUEUE
   - 157: SECOND MULTIPLEXING SECTION
   - 158: ERROR CORRECTION ENCODING SECTION
   - 159: MODULATION SECTION
   - 160: TRANSMISSION RF SECTION

   RECEPTION SIGNAL
   TRANSMISSION SIGNAL
FIG. 2
   TIME SLOT
   MAIN USER
   MODULATION SYSTEM
   ENCODING RATE
FIG. 3
   TIME SLOT
   SUB USER
   MODULATION SYSTEM
   ENCODING RATE
   NONE

## Claims

1. A base station apparatus comprising:
a line quality prediction section for predicting radio line quality in each communication terminal apparatus based on a report value indicating the state of a propagation path,
a first scheduler for carrying out scheduling of determining a communication terminal apparatus as a packet destination in each time slot based on prediction results of this line quality prediction section,
a second scheduler for carrying out scheduling of determining a communication terminal apparatus as a packet destination in the time slot to which a packet to be retransmitted is assigned in said first scheduler, based on the prediction results of said line quality prediction section, and
a transmission section for transmitting a packet in accordance with the scheduling of said first scheduler or said second scheduler.

2. The base station apparatus as claimed in claim 1,
wherein the first scheduler assigns a communication terminal apparatus with the best line quality in each time slot, and
said second scheduler assigns a communication terminal apparatus with the best line quality except for the communication terminal apparatus assigned in said first scheduler.

3. The base station apparatus as claimed in claim 1, wherein the transmission section transmits the packet in the time slot to which the packet to be retransmitted is assigned, in accordance with the scheduling of the first scheduler when retransmission is required from the communication terminal apparatus to which the packet has been transmitted, or in accordance with the scheduling of the second scheduler when no retransmission is required.

4. A packet transmission method comprising:
a step of carrying out a first scheduling of determining a communication terminal apparatus as a packet destination in each time slot based on prediction results of radio line quality in each communication terminal apparatus,
a step of carrying out a second scheduling of determining a preliminary communication terminal as a packet destination in a time slot to which a packet to be retransmitted is assigned, and
a step of transmitting a packet in accordance with said first scheduler or said second scheduler.

5. The packet transmission method as claimed in claim 4, further comprising transmitting the packet in the time slot to which the packet to be retransmitted is assigned, in accordance with the scheduling of the first scheduler when retransmission is required from the communication terminal apparatus to which the packet has been transmitted, and in accordance with the scheduling of the second scheduler when no retransmission is required.
